(19) Europäisches Patentamt
European Patent Office
Office européen des brevets

(11) **EP 2 345 123 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(21) Anmeldenummer: **08874999.9**

(22) Anmeldetag: **28.10.2008**

(51) Int Cl.:
***H02H 3/28*** *(2006.01)*

(86) Internationale Anmeldenummer:
**PCT/EP2008/009190**

(87) Internationale Veröffentlichungsnummer:
**WO 2010/048973 (06.05.2010 Gazette 2010/18)**

(54) **DIFFERENTIALSCHUTZVERFAHREN UND DIFFERENTIALSCHUTZGERÄT**

DIFFERENTIAL PROTECTION METHOD AND DIFFERENTIAL PROTECTION DEVICE

PROCÉDÉ DE PROTECTION DIFFÉRENTIELLE ET APPAREIL DE PROTECTION DIFFÉRENTIELLE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**20.07.2011 Patentblatt 2011/29**

(73) Patentinhaber: **Siemens Aktiengesellschaft**
**80333 München (DE)**

(72) Erfinder:
• **FUNK, Hans-Werner**
**90768 Fürth (DE)**
• **SCHICK, Mathias**
**91580 Petersaurach (DE)**
• **SCHNEIDER, Sebastian**
**90491 Nürnberg (DE)**
• **SCHUMACHER, Martin**
**91074 Herzogenaurach (DE)**
• **SCHÄFER, Bernd**
**91074 Herzogenaurach (DE)**

(56) Entgegenhaltungen:
JP-A- 11 341 679          JP-A- 2003 199 244
JP-A- 2004 088 919          US-A- 5 367 425
US-A1- 2004 057 175

**Beschreibung**

Die Erfindung betrifft ein Verfahren zum Erfassen eines Kurzschlusses bezüglich zumindest einer Phase eines Schutzobjektes, z.B. einer Sammelschiene, einer elektrischen Energieübertragungleitung oder eines Leistungstransformators, in einem mehrphasigen elektrischen Energieübertragungsnetz, bei dem für jede Phase an zumindest zwei Messstellen des Schutzobjektes Stromwerte erfasst werden, für jede Phase aus den Stromwerten Differenzstromwerte bestimmt werden und ein Auslösesignal für eine bestimmte Phase erzeugt wird, wenn der Differenzstromwert dieser Phase einen Schwellenwert übersteigt. Die Erfindung bezieht sich zudem auch auf ein entsprechendes Differentialschutzgerät.

Entsprechende Differentialschutzgeräte, bei denen das eingangs genannte Verfahren zur Anwendung kommt, werden von der Anmelderin beispielsweise als Leitungsdifferentialschutzgeräte unter dem Namen "SIPROTEC 4: 7SD52" oder Sammelschienenschutzgeräte unter dem Namen "SIPROTEC 4: 7SS52" hergestellt und vertrieben.

Aufgrund von Bestrebungen, elektrische Schaltanlagen in Energieversorgungsnetzen in immer kompakterer Bauweise auszuführen und gleichzeitig die zu übertragenden Leistungen immer weiter zu erhöhen, werden die Stromwandler, mit denen die zur Berechnung der Differenzstromwerte benötigten Stromwerte erfasst werden, üblicherweise so klein wie möglich ausgeführt und auf engem Raum zueinander benachbart angeordnet. Diese Entwicklung ist insbesondere in gasisolierten Hochspannungsschaltanlagen zu beobachten. Aufgrund der räumlichen Nähe der Stromwandler der einzelnen Phasen kann es bei einem Kurzschluss zwischen einer einzelnen Phase und Erde (einem sogenannten Erdkurzschluss) oder einem Kurzschluss zwischen zwei oder mehr Phasen durch einen dadurch hervorgerufenen hohen Kurzschlussstrom zu einer Beeinflussung auch derjenigen Stromwandler kommen, die den nicht von dem Kurzschluss betroffenen Phasen zugeordnet sind. Hierbei werden durch den kurzschlussbedingt hohen Primärstrom lokale Feldstärkeüberhöhungen in den Stromwandlern der fehlerfreien Phasen verursacht, wodurch in diesen Stromwandlern eine Spannung induziert wird, die in den sekundärseitig an die Stromwandler angeschlossenen Bürden zu einem entsprechenden Stromfluss führt. Ein an die Sekundärseite angeschlossenes Differentialschutzgerät, das die entsprechenden Stromwerte als Grundlage für die Berechnung von Differenzströmen verwendet, kann im ungünstigsten Fall einen signifikanten Differenzstrom erkennen und daher fälschlicherweise ein Auslösesignal an einen oder mehrere entsprechende Leistungsschalter abgeben, um zumindest die betreffende Phase vom restlichen Energieversorgungsnetz abzutrennen.

Das Problem besteht einerseits bei externen Kurzschlüssen, d.h. bei Kurzschlüssen, die außerhalb von der Schutzzone der Differentialschutzgeräte liegen, die durch die Beeinflussung der benachbarten Stromwandler dennoch zu einem signifikanten Differenzstrom in der eigentlich fehlerfreien Schutzzone führen und damit fälschlicherweise eine Abschaltung dieser Schutzzone verursachen. Andererseits kann sich auch bei der Möglichkeit einer phasenselektiven Abschaltung ein interner Kurzschluss, d.h. ein Kurzschluss, der in der betrachteten Schutzzone liegt, auf die Stromwandler der fehlerfreien Phasen auswirken und zu einer Abschaltung solcher fehlerfreien Phasen führen.

Beispiele dafür sind aus US 2004/057175 und JP 11341679 bekannt.

Um solche Fehlauslösungen aufgrund von Wandlerbeeinflussungen zu umgehen, versucht man üblicherweise, deutlich überdimensionierte Stromwandler einzusetzen, bei denen reduzierte Sättigungseffekte auftreten. Dies kann durch Vorsehen spezieller Luftspalte in den Wandlerkernen oder durch sogenannte Ausgleichswicklungen noch unterstützt werden. Solche Maßnahmen sind jedoch mit hohen Kosten und entsprechendem Platzaufwand verbunden und verhindern ferner auch nicht vollständig die Effekte partieller Sättigung.

Außerdem könnte der Differentialschutz entsprechend unempfindlicher eingestellt werden. Hierdurch besteht jedoch die Gefahr, bestimmte stromschwächere Fehler nicht zu erkennen.

Der Erfindung liegt die Aufgabe zugrunde, ein Differentialschutzverfahren der oben genannten Art sowie ein entsprechendes Differentialschutzgerät anzugeben, das trotz räumlicher Nähe der zur Erfassung der Stromwerte verwendeten Stromwandler eine zuverlässige und selektive Abschaltung nur derjenigen Phase(n) vornimmt, die tatsächlich von einem Kurzschluss betroffen ist (sind).

Zur Lösung dieser Aufgabe wird erfindungsgemäß ein Verfahren der eingangs genannten Art vorgeschlagen, bei dem für jede Phase aus den Stromwerten ein Stabilisierungsstromwert bestimmt und ein Blockiersignal für eine bestimmte Phase erzeugt wird, wenn der betreffende Stabilisierungsstromwert unterhalb eines vorgegebenen Stabilisierungsschwellenwertes liegt, wobei das Blockiersignal die Ausgabe eines Auslösesignals für die betreffende Phase unterdrückt.

Der Erfindung liegt die Erkenntnis zugrunde, dass die Stabilisierungsstromwerte der nicht von dem Kurzschluss betroffenen Phasen trotz Beeinflussung der einzelnen Stromwandler untereinander signifikant kleiner sind als der Stabilisierungsstrom der tatsächlich von dem Kurzschluss betroffenen Phase. Es kann also durch ein relativ einfaches Kriterium anhand der Stabilisierungsstromwerte für die einzelnen Phasen entschieden werden, ob tatsächlich ein Kurzschluss in einer bestimmten Phase des Schutzobjektes vorliegt oder ob ein Differenzstrom für diese Phase lediglich aufgrund einer Beeinflussung des Stromwandlers durch die von dem Kurzschluss betroffene Phase aufgetreten ist.

Ein besonderer Vorteil der Erfindung besteht darin, dass lediglich durch eine Änderung der von den Schutzgeräten abgearbeiteten Software eine Verbesserung der Stabilität des Differentialschutzverfahrens bei externen Fehlern und der Selektivität der Auslösung erfolgen kann; ein kostenintensiver Einsatz anderer Stromwandler ist nicht notwendig.

Erfindungsgemäss ist vorgesehen, dass der Stabilisierungsschwellenwert dynamisch an die jeweilige vorliegende Situation angepasst wird. Hierzu wird vorgeschlagen, dass der maximale Stabilisierungsstromwert bestimmt wird und der Stabilisierungsschwellenwert in Abhängigkeit von dem maximalen Stabilisierungsstromwert festgelegt wird.

In diesem Zusammenhang kann beispielsweise vorgesehen sein, dass der Stabilisierungsschwellenwert durch Multiplikation des maximalen Stabilisierungsstromwertes mit einem vorgebbaren Querstabilisierungsfaktor festgelegt wird, wobei der Querstabilisierungsfaktor zwischen 0 und 1, vorzugsweise zwischen 0,3 und 0,5 gewählt wird. Als ein besonders für die Einstellung des Querstabilisierungsfaktors zu bevorzugender Wert hat sich der Wert 0,4 ergeben, d. h., dass für diejenigen Phasen, deren Stabilisierungsstromwerte einen Wert von 40% des maximalen Stabilisierungsstromwertes nicht überschreiten, ein Blockiersignal ausgegeben wird.

Erfindungsgemäss ist vorgesehen, dass eine Phasenlage zwischen den Differenzstromwerten oder den Stabilisierungsstromwerten der Phase mit dem maximalen Stabilisierungsstrom und den Differenzstromwerten oder den Stabilisierungsstromwerten der übrigen Phasen bestimmt wird und das Blockiersignal für eine bestimmte Phase nur dann erzeugt wird, wenn die Phasenlage dieser Phase mit der Phasenlage derjenigen Phase mit dem maximalen Stabilisierungsstromwert übereinstimmt oder um 180 Grad verschoben ist. Dieser Weiterbildung liegt die weitere Erkenntnis zugrunde, dass ein durch die Beeinflussung der einzelnen Stromwandler entstehender Differenzstrom oder Stabilisierungsstrom in allen Phasen dieselbe Phasenlage annehmen wird, während ein durch einen tatsächlichen Kurzschluss in einer Phase hervorgerufener Differenzstrom oder Stabilisierungsstrom eine davon abweichende Phasenlage haben wird. Durch die Berücksichtigung der Phasenlage der einzelnen Differenzströme oder Stabilisierungsströme kann also ein Blockiersignal mit noch größerer Zuverlässigkeit erzeugt werden.

Eine noch weiter erhöhte Zuverlässigkeit bei der Bildung des Blockiersignals kann dadurch erreicht werden, dass für jede Phase ein Verlauf aus mehreren zeitlich unmittelbar aufeinanderfolgenden Differenzstromwerten oder Stabilisierungsstromwerten betrachtet wird und ein Blockiersignal für eine bestimmte Phase nur dann erzeugt wird, wenn ein Anstieg des Verlaufs für diese Phase erst um einen vorgegebenen Zeitversatz, z.B. 2-3 Millisekunden, verzögert eintritt als der Anstieg des Verlaufs für diejenige Phase mit dem maximalen Stabilisierungsstromwert. Ein durch Beeinflussung der Stromwandler erzeugter Anstieg in einem Differenzstromverlauf oder Stabilisierungsstromverlauf bezüglich einer nicht von einem Kurzschluss betroffenen Phase wird nämlich üblicherweise mit einem gewissen Zeitversatz zu dem Anstieg im Differenzstromverlauf bzw. Stabilisierungsstromverlauf der tatsächlich von dem Kurzschluss betroffenen Phase stattfinden.

Hinsichtlich der Bildung der Stabilisierungsstromwerte kann vorteilhafterweise vorgesehen sein, dass die jeweiligen Stabilisierungsstromwerte durch Summenbildung der Beträge aller für die betreffende Phase erfassten Stromwerte berechnet werden.

Die oben genannte Aufgabe wird auch durch ein elektrisches Differentialschutzgerät zur Überwachung eines Schutzobjektes in einem elektrischen Energieversorgungsnetz auf Kurzschlüsse gelöst, das eine Datenverarbeitungseinrichtung aufweist, die zur Durchführung eines der vorgenannten Verfahren eingerichtet ist.

Die Erfindung soll im Folgenden anhand von Ausführungsbeispielen näher erläutert werden. Hierzu zeigen:

Figur 1    eine schematische Ansicht eines ersten mittels eines Differentialschutzsystems überwachten Schutzobjektes;

Figur 2    eine schematische Ansicht eines zweiten mittels eines Differentialschutzsystems überwachten Schutzobjektes;

Figur 3    ein schematisches Blockschaltbild zur Erläuterung der Blockierung eines Auslösesignals eines Differentialschutzgerätes;

Figur 4    ein Ausführungsbeispiel einer Differentialschutzeinheit eines Differentialschutzgerätes;

Figur 5    ein erstes Ausführungsbeispiel einer Blockiereinrichtung in einem Differentialschutzgerät; und

Figur 6    ein zweites Ausführungsbeispiel einer Blockiereinrichtung eines Differentialschutzgerätes.

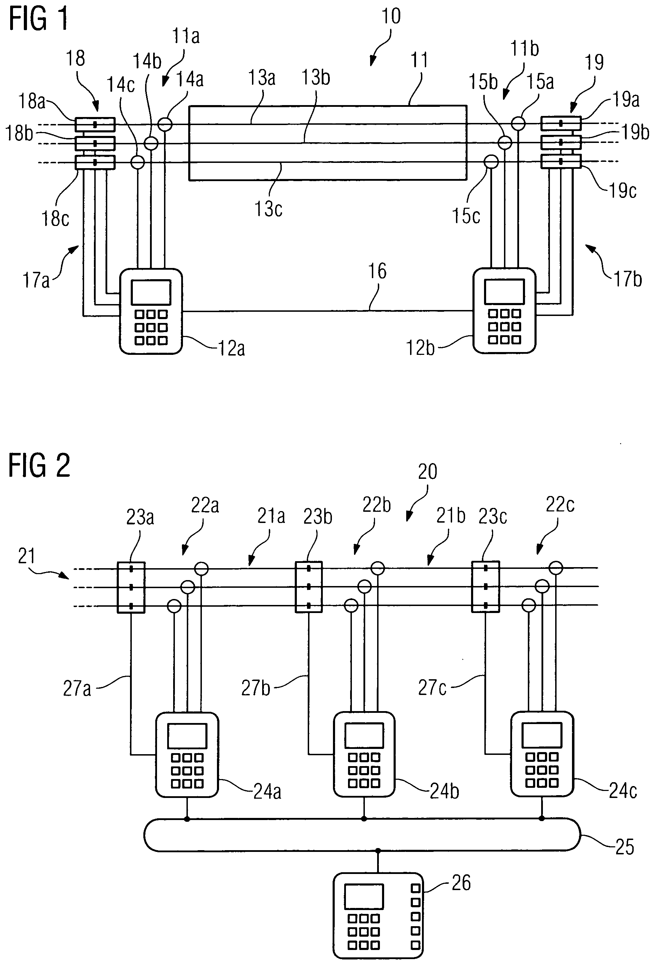

Figur 1 zeigt einen Abschnitt 10 eines im Weiteren nicht näher dargestellten elektrischen Energieversorgungsnetzes. In dem Abschnitt 10 ist ein Schutzobjekt 11 angeordnet, bei dem es sich beispielsweise um eine dreiphasige elektrische Freileitung eines elektrischen Energieversorgungsnetzes handeln kann. Das Schutzobjekt 11 wird an seinem ersten Ende 11a mittels eines ersten Differentialschutzgerätes 12a und an seinem zweiten Ende 11b mittels eines zweiten Differentialschutzgerätes 12b überwacht. Hierfür werden für jede Phase 13a, 13b, 13c des Schutzobjektes 11 mit ersten Stromwandlern 14a an dem ersten Ende 11a des Schutzobjektes 11 und zweiten Stromwandlern 15a, 15b und 15c an dem zweiten Ende 11b des Schutzobjektes 11 Stromwerte erfasst und dem jeweiligen Differentialschutzgerät 12a bzw. 12b zugeleitet.

Die Differentialschutzgeräte 12a bzw. 12b sind durch eine Kommunikationsleitung 16 miteinander verbunden und können über diese Kommunikationsleitung dem jeweils anderen Differentialschutzgerät 12a bzw. 12b die eigenen Stromwerte in synchronisierter Form zur Verfügung stellen, das heißt, es können in jedem Differentialschutzgerät 12a bzw. 12b für jede Phase 13a, 13b, 13c des Schutzobjektes 11 jeweils Paare aus gleichzeitig an beiden Enden 11a und 11b aufgenommenen Stromwerten gebildet werden.

Anhand der in beiden Differentialschutzgeräten 12a und 12b verfügbaren Stromwerten von beiden Enden 11a und 11b des Schutzobjektes 11 kann in einem oder beiden Differentialschutzgeräten 12a bzw. 12b mittels einer Datenverarbeitungseinrichtung eine Differenz der Beträge der Stromwerte pro Phase (bzw. eine vorzeichenrichtige Summe) gebildet werden und mit einem Schwellenwert verglichen werden.

Bei fehlerfreiem Schutzobjekt 11 ist der pro Phase in das Schutzobjekt 11 eintretende Strom gleich dem aus dem Schutzobjekt 11 austretenden Strom, so dass die Differenz der Beträge der Stromwerte den Wert Null annehmen müsste. Auf Grund von Wandlerungenauigkeiten und Messfehlern nimmt der Differenzwert auch im fehlerfreien Falle allerdings nie exakt den Wert Null an, sondern liegt stattdessen unterhalb eines vorgegebenen Schwellenwertes. Dieser Schwellenwert kann entweder statisch oder dynamisch, beispielsweise an die Höhe der jeweiligen Phasenströme angepasst, festgelegt werden.

Überschreitet für eine bestimmte Phase der Differenzwert den vorgegebenen Schwellenwert, so weist dies auf einen Kurzschluss innerhalb der betreffenden Phase des Schutzobjektes 11 hin, bei dem es sich beispielsweise um einen Erdkurzschluss oder einen zwei- oder mehrpoligen Kurzschluss, d.h. einen Kurzschluss zwischen zwei oder mehr Phasen des Schutzobjektes, handeln kann. Für diejenige Phase, bei der der Fehler erkannt worden ist, geben die Differentialschutzgeräte 12a und 12b über Steuerleitungen 17a, 17b ein entsprechendes Auslösesignal an phasenselektiv schaltbare Leistungsschalter 18 bzw. 19 ab, wodurch der entsprechende phasenbezogene Leistungsschalter 18a, 18b, 18c bzw. 19a, 19b, 19c zum Öffnen seiner Schaltkontakte veranlasst wird und die von dem Fehler betroffene Phase 13a, 13b, 13c vom restlichen Energieversorgungsnetz abtrennt.

Liegt beispielsweise auf der Phase 13b ein Erdkurzschluss vor, so erkennen die Differentialschutzgeräte 12a bzw. 12b dies anhand eines den jeweiligen Schwellenwert übersteigenden Differenzstromwertes und geben Auslösesignale an die phasenbezogenen Leistungsschalter 18b bzw. 19b ab, um die Phase 13b des Schutzobjektes 11 von dem Energieversorgungsnetz abzutrennen.

Durch die räumliche Nähe der Stromwandler 14a, 14b, 14c bzw. 15a, 15b, 15c kann es jedoch zur Beeinflussung von Stromwandlern, die einer fehlerfreien Phase zugeordnet sind, durch den auf der Primärseite eines Stromwandlers einer fehlerbehafteten Phase fließenden hohen Kurzschlussstrom kommen, so dass die Differentialschutzgeräte 12a, 12b auch bezüglich der fehlerfreien Phasen einen Differenzstrom erkennen und diese Phasen ebenfalls abschalten. Deshalb muss über ein später genauer beschriebenes Verfahren eine solche Fehlabschaltung von fehlerfreien Phasen verhindert werden.

Obwohl gemäß Figur 1 ein dreiphasiges Schutzobjekt 11 mit lediglich zwei Enden 11a bzw. 11b gezeigt ist, kann das erfinderische Verfahren auch bei beliebigen mehrphasigen Schutzobjekten mit zwei oder mehr Enden, beispielsweise elektrischen Sammelschienen mit mehreren Abzweigen, eingesetzt werden. Die in Figur 1 sowie in den folgenden Figuren beschriebene Funktionsweise ist dann entsprechend auf mehr Enden eines solchen Schutzobjektes zu erweitern.

Während sich das Ausführungsbeispiel des erfindungsgemäßen Verfahrens gemäß Figur 1 auf die Problematik der Erkennung von internen Kurzschlüssen, d.h. solchen Kurzschlüssen, die innerhalb der von den Differentialschutzgeräten 12a, 12b überwachten Zone liegen, und eine Abschaltung nur der von dem Kurzschluss tatsächlich betroffenen Phase(n) bezieht, soll anhand des Ausführungsbeispiels gemäß Figur 2 die stabile Erkennung von externen Fehlern beschrieben werden.

Hierzu zeigt Figur 2 einen Abschnitt 20 eines elektrischen Energieversorgungsnetzes mit einem Schutzobjekt in Form einer dreiphasigen Sammelschiene 21. Zur besseren Übersichtlichkeit ist auf die Darstellung von möglichen von der Sammelschiene abgehenden Abzweigen verzichtet worden.

Die Sammelschiene 21 ist in zwei Schutzzonen 21a und 21b aufgeteilt. Jeder Abschnitt ist an seinen Enden von je einer Messstelle 22a, 22b, 22c und je einem Leistungsschalter 23a, 23b, 23c begrenzt. Bei dem Ausführungsbeispiel gemäß Figur 2 handelt es sich bei den Leistungsschaltern 231, 23b, 23c um 3-polige Leistungsschalter, bei denen alle 3 Phasen gemeinsam geschaltet werden, d.h. eine phasenselektive Abschaltung einzelner Phasen erfolgt hier nicht. Diese Ausführungsform von Leistungsschaltern ist häufig in Hochspannungs- oder Mittelspannungsschaltanlagen anzutreffen. Für die folgenden Ausführungen soll die Schutzzone 21a näher betrachtet werden, d.h. alle innerhalb dieser Schutzzone 21a auftretenden Fehler, wie z.B. Erdkurzschlüsse oder zwei- oder mehrpolige Kurzschlüsse zwischen zwei oder mehr Phasenleitern, werden als interne Fehler angesehen, während außerhalb dieser Schutzzone 21a auftretende Fehler - z.B. in der Schutzzone 21b auftretende Fehler - als externe Fehler bezeichnet werden.

An den Messstellen 22a, 22b, 22c werden mit Stromwandlern Sekundärstrome erfasst und Messgeräten 24a, 24b, 24c zugeführt. Diese erfassen die Sekundärströme in Form von Stromwerten und übermitteln diese Stromwerte über eine Kommunikationsverbindung 25, bei der es sich beispielhaft um einen Kommunikationsbus in Ringstruktur handeln kann, an ein zentrales Differentialschutzgerät 26. Das zentrale Differentialschutzgerät 26 bestimmt bezüglich jeder Schutzzone 21a, 21b anhand der entsprechenden Stromwerte die Differenzströme. Unter Verwendung der den jeweiligen Schutzzonen 21a, 21b zugehörigen Differenzströme trifft das zentrale Differentialschutzgerät eine Entscheidung darüber, ob in der betreffenden Schutzzone 21a, 21b ein Fehler vorliegt oder nicht. Sollte das zentrale Differentialschutzgerät einen Fehler erkennen, sendet es über die Kommunikationsverbindung 25 Auslösesignale an die entsprechenden Messgeräte 24a, 24b, 24c, die ihrerseits Auslösesignale über Steuerleitungen 27a, 27b, 27c an die entsprechenden Leistungsschalter 23a, 23b, 23c abgeben, um die fehlerbehaftete Schutzzone 21a, 21b komplett, d.h. bezüglich aller drei Phasen, von der restlichen Sammelschiene 21 abzutrennen.

Tritt nun ein Fehler in der Schutzzone 21b auf, so kann es durch die räumliche Nähe der Stromwandler an der Messstelle 23b dazu kommen, dass sich der durch den Fehler hervorgerufene hohe Kurzschlussstrom auf die benachbarten Stromwandler an dieser Messstelle 23b auswirkt und die Berechnung des Differenzstromes für die Schutzzone 21a verfälscht, so dass das zentrale Schutzgerät aufgrund der Wandlerbeeinflussung zusätzlich zu dem Fehler in der tatsächlich betroffenen Schutzzone 21b fälschlicherweise auch einen internen Fehler in der Schutzzone 21a erkennt und diese abschaltet. Da aus Sicht der Schutzzone 21a allerdings tatsächlich nur ein externer Fehler - nämlich der Fehler in Schutzzone 21b - vorliegt, ist eine solche Abschaltung unerwünscht. Das im Folgenden beschriebene Verfahren ermöglicht es daher, auch eine solche fälschliche Behandlung externer Fehler als interne Fehler zu vermeiden.

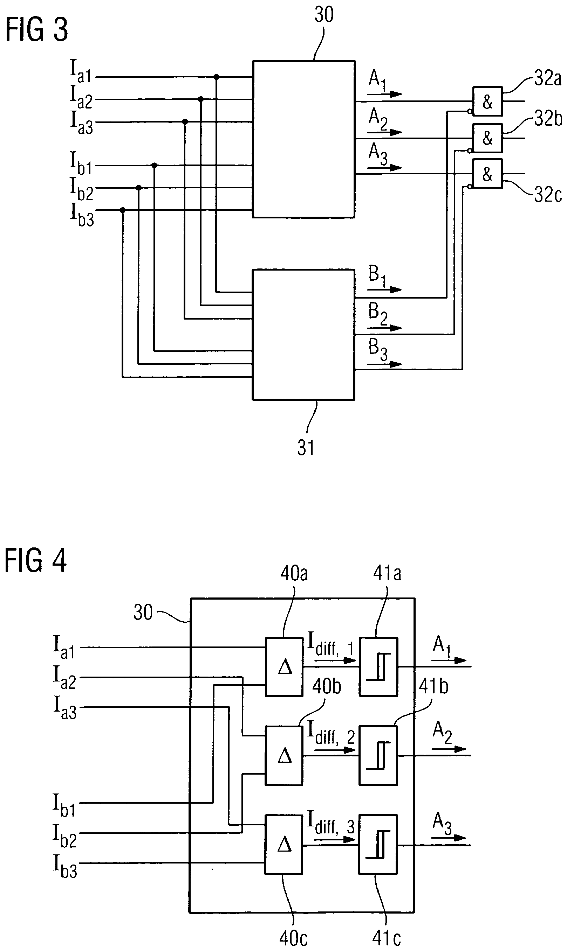

Figuren 3 bis 6 zeigen in schematischer Blockschaltbilddarstellung Teile von in den Differentialschutzgeräten 12a, 12b (vgl. Figur 1) bzw. in dem zentralen Differentialschutzgerät 26 (vgl. Figur 2) vorgesehenen Datenverarbeitungseinrichtungen. Die hierzu in den Figuren 3 bis 6 dargestellten Funktionsblöcke sind in den Datenverarbeitungseinrichtungen der Differentialschutzgeräte 12a, 12b bzw. 26 üblicherweise mittels einer speziellen Gerätesoftware realisiert.

In den folgenden Ausführungen wird jeweils Bezug auf ein Schutzobjekt und die an den Enden dieses Schutzobjektes erfassten Stromwerte genommen. Bei diesem Schutzobjekt kann es sich beispielsweise um das Schutzobjekt 11 gemäß Figur 1 handeln. In diesem Fall werden die Stromwerte $I_{a1}$, $I_{a2}$ und $I_{a3}$ an dem ersten Ende 11a und die Stromwerte $I_{b1}$, $I_{b2}$ und $I_{b3}$ an dem zweiten Ende 11b von den Differentialschutzgeräten 12a, 12b unter Verwendung der Stromwandler 14a, 14b, 14c bzw. 15a, 15b, 15c aufgenommen. Außerdem kann es sich bei dem Schutzobjekt auch um die betrachtete Schutzzone 21a gemäß Figur 2 handeln. In diesem Fall werden die Stromwerte $I_{a1}$, $I_{a2}$ und $I_{a3}$ mittels des Messgerätes 24a unter Verwendung der Stromwandler an der Messstelle 22a und die Stromwerte $I_{b1}$, $I_{b2}$ und $I_{b3}$ mittels des Messgerätes 24b unter Verwendung der Stromwandler an der Messstelle 22b aufgenommen und an das zentrale Differentialschutzgerät 26 übermittelt.

Figur 3 zeigt eine Differentialschutzeinheit 30 einer Datenverarbeitungseinrichtung eines Differentialschutzgerätes 12a, 12b bzw. 26, die eingangsseitig mit den über die jeweiligen Stromwandler an dem Schutzobjektes erfassten Stromwerten $I_{a1}$, $I_{a2}$ und $I_{a3}$ sowie $I_{b1}$, $I_{b2}$ und $I_{b3}$ beaufschlagt ist. Die Differentialschutzeinheit 30 berechnet in später genauer erläuterter Weise Differenzstromwerte und entscheidet anhand der Differenzstromwerte, ob für die jeweiligen Phasen ein Kurzschluss vorliegt. Sollte ein solcher Kurzschluss erkannt werden, so gibt die Differentialschutzeinheit 30 ausgangsseitig Auslösesignale $A_1$, $A_2$ und $A_3$ ab.

Bei dem Ausführungsbeispiel gemäß Figur 1 werden diese Auslösesignale $A_1$, $A_2$ und $A_3$ zur phasenselektiven Abschaltung den jeweiligen Schalterpolen 18a, 18b, 18c bzw. 19a, 19b, 19c der entsprechenden Leistungsschalter 18 bzw. 19 zugeführt werden und diese zum Öffnen ihrer Schaltkontakte veranlassen, um die jeweilige von dem Fehler betroffene Phase vom restlichen Energieversorgungsnetz abzutrennen.

Bei dem Ausführungsbeispiel gemäß Figur 2 werden die einzelnen Phasen hingegen nicht selektiv abgeschaltet. Daher reicht das Vorhandensein eines Auslösesignals $A_1$ oder $A_2$ oder $A_3$ aus, alle Pole des betreffenden Leistungsschalters 23a, 23b zu öffnen und damit die Schutzzone 21a komplett abzuschalten.

Auf Grund der insbesondere bei Schaltanlagen mit kompakter Bauweise vorhandenen räumlich engen Anordnung der Stromwandler, wie dies beispielsweise bei gasisolierten Schaltanlagen von Hochspannungsnetzen, aber auch in Mittelspannungsschaltanlagen immer häufiger der Fall ist, kann es bei Kurzschlüssen auf einer oder mehreren der Phasen mit dadurch hervorgerufenen hohen Fehlerströmen, die dem Stromwandler der von dem Fehler betroffenen Phase eingangsseitig zugeführt werden, zu einer Beeinflussung auch der übrigen Stromwandler führen, die den fehlerfreien Phasen zugeordnet sind. Auf Grund solcher Beeinflussungen können durch die Stromwandler sekundärseitig Ströme an das entsprechende Differentialschutzgerät 12a, 12b bzw. 26 weitergeleitet werden, die das Differentialschutzgerät 12a, 12b bzw. 26 zur Berechung von signifikanten Differenzströmen veranlassen, woraufhin das Differentialschutzgerät 12a, 12b bzw. 26 entsprechend einen Kurzschluss erkennen würde. Hierdurch würde eine fehlerhafte Abschaltung einer eigentlich fehlerfreien Phase (Figur 1) oder sogar aller drei Phasen (Figur 2) erfolgen.

Figur 3 zeigt weiterhin eine Blockiereinrichtung 31, die ebenfalls eingangsseitig mit den Stromwerten $I_{a1}$, $I_{a2}$, $I_{a3}$ bzw. $I_{b1}$, $I_{b2}$, $I_{b3}$ beaufschlagt ist. Die Blockiereinrichtung bestimmt anhand der Stromwerte $I_{a1}$, $I_{a2}$, $I_{a3}$, bzw. $I_{b1}$, $I_{b2}$, $I_{b3}$ in später näher erläuterter Weise, ob für die jeweilige Phase tatsächlich ein Kurzschluss vorliegt oder ob lediglich eine Beeinflussung des entsprechenden Stromwandlers einer solchen Phase durch den hohen fließenden Kurzschlussstrom stattgefunden hat. Stellt die Blockiereinrichtung 31 für die betreffende Phase eine solche Beeinflussung des Stromwandlers fest, so gibt sie ausgangsseitig ein entsprechende Blockiersignale $B_1$, $B_2$ bzw. $B_3$ ab, die zur Unterdrückung der Ausgabe der entsprechenden Auslösesignale $A_1$, $A_2$, $A_3$ an die jeweiligen Leistungsschalter verwendet werden. Hierzu können beispielsweise Und-Glieder 32a, 32b, 32c vorgesehen sein, die eingangsseitig einerseits mit den jeweiligen Auslösesignalen $A_1$, $A_2$, $A_3$ und andererseits über einen invertierenden Eingang mit dem jeweiligen Blockiersignal $B_1$, $B_2$, $B_3$ beaufschlagt sind.

Wird beispielsweise bei einem bezüglich der Phase 13b (Figur 1) vorliegendem Erdkurzschluss anhand der Stromwerte $I_{a1}$, $I_{a2}$, $I_{a3}$, $I_{b1}$, $I_{b2}$, $I_{b3}$ für die Phasen 13a und 13c zwar ein erhöhter Differenzstromwert, aber gleichzeitig auch in der Blockiereinrichtung 21 eine Stromwandlerbeeinflussung erkannt, so werden die Auslösesignale $A_1$ und $A_3$ über die Blockiersignale $B_1$ und $B_3$ unterdrückt, so dass lediglich der für Phase 13b anliegende Erdkurzschluss über das nicht blockierte Auslösesignal $A_2$ abgeschaltet wird.

Im Falle des Ausführungsbeispiels gemäß Figur 2 bedeutet dies, dass im Falle eines externen Fehlers in Schutzzone 21b, der aufgrund des hohen Kurzschlussstromes zu einer Beeinflussung der Stromwandler der fehlerfreien Phasen an der Messstelle 23b führt, für die Schutzzone 21a bezüglich der fehlerfreien Phasen zwar ein signifikanter Differenzstrom erkannt wird, die zugehörigen Blockiersignale aber eine Abschaltung der Schutzzone 21a verhindern. Bezüglich der von dem externen Fehler betroffenen Phase wird hingegen kein signifikanter Differenzstrom erkannt und daher auch kein Auslösesignal erzeugt, da der hohe Kurzschlussstrom sowohl in die Schutzzone 21a hinein- als auch wieder aus ihr herausfließt.

Figur 4 zeigt beispielhaft ein Ausführungsbeispiel der Differentialschutzeinheit 30. Wie bereits zu Figur 3 erläutert, werden der Differentialschutzeinheit 30 eingangsseitig die Stromwerte $I_{a1}$, $I_{a2}$, $I_{a3}$ bzw. $I_{b1}$, $I_{b2}$ und $I_{b3}$ zugeführt. Die jeweils einer Phase des Schutzobjektes zugeordneten Stromwerte werden Differenzwertbildnern 40a, 40b und 40c zugeführt, wo gemäß der erfolgenden Gleichung (1) für die jeweilige Phase eine vorzeichenrichtige Summe der Stromwerte gebildet wird:

$$I_{diff,i} = \left| \sum_{n=1}^{N} I_{ni} \right| \qquad (1)$$

wobei $I_{diff,i}$ der Differenzstrom für die jeweilige Phase ist, i die entsprechende Phase (1, 2, 3) angibt, n das jeweilige betrachtete Ende des Schutzobjektes angibt und N für die gesamte Anzahl der Enden des Schutzobjektes steht. Da folglich durch die vorzeichenrichtige Betrachtung quasi die Differenz zwischen den eingehenden und den ausgehenden Strömen gebildet wird, werden die jeweiligen Blöcke zur Berechnung "Differenzwertbildner" genannt.

Entsprechend Gleichung (1) wird in dem Differenzwertbildner 40a die vorzeichenrichtige Summe der Stromwerte $I_{a1}$ und $I_{b1}$, in dem Differenzwertbildner 40b die vorzeichenrichtige Summe der Stromwerte $I_{a2}$ und $I_{b2}$ sowie in dem Differenzwertbilder 40c die vorzeichenrichtige Summe aus den Stromwerten $I_{a3}$ und $I_{b3}$ gebildet. Die resultierenden Differenzstromwerte $I_{diff,1}$, $I_{diff,2}$ und $I_{diff,3}$ werden daraufhin Schwellenwertgliedern 41a, 41b, 41c zugeführt und mit einem statisch oder dynamisch festgelegten Schwellenwert verglichen. Ausgangsseitig gibt die Differentialschutzeinheit 30 Auslösesignale $A_1$, $A_2$ und $A_3$ ab, wenn für die betreffende Phase der jeweilige Differenzstromwert $I_{diff,1}$, $I_{diff,2}$ bzw. $I_{diff,3}$ oberhalb der in den Schwellenwertgliedern 41a, 41b, 41c zum Vergleich herangezogenen Schwellenwerte liegt.

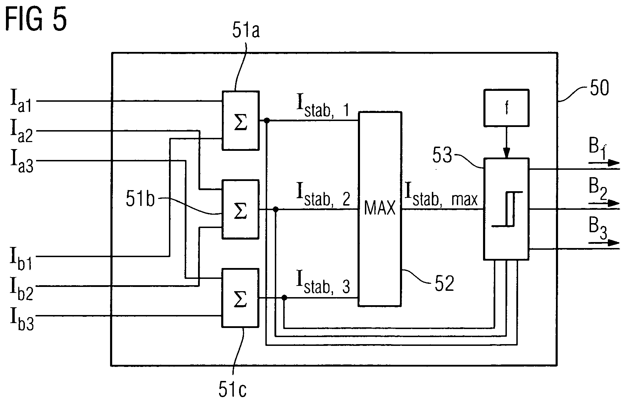

Figur 5 zeigt ein erstes Ausführungsbeispiel einer Blockiereinrichtung 50. Wie bereits zu Figur 3 erläutert, werden der Blockiereinrichtung 50 die einzelnen Stromwerte $I_{a1}$, $I_{a2}$, $I_{a3}$ sowie $I_{b1}$, $I_{b2}$, $I_{b3}$ zugeführt. Die jeweils zu einer Phase gehörenden Stromwerte werden eingangsseitig Summenbildnern 51a, 51b, 51c zugeführt, die gemäß folgender Gleichung (2) die zu der entsprechenden Phase gehörenden Stabilisierungsstromwerte als Summe der Beträge der einzelnen Stromwerte bildet.

$$I_{stab,i} = \sum_{n=1}^{N} \left| I_{ni} \right| \qquad (2)$$

Hierbei ist $I_{stab,i}$ der Stabilisierungsstrom der jeweiligen Phase; die übrigen Bezeichnungen sind entsprechend Gleichung (1) zu verstehen.

Entsprechend Gleichung (2) wird also in dem Summenbildner 51a die Summe der Beträge der Stromwerte $I_{a1}$ und $I_{b1}$, im Summenbildner 51b die Summe der Beträge der Stromwerte $I_{a2}$ und $I_{b2}$ und in dem Summenbildner 51c die Summe der Beträge $I_{a3}$ und $I_{b3}$ gebildet. Die resultierenden Stabilisierungsstromwerte $I_{stab,1}$, $I_{stab,2}$ und $I_{stab,3}$ werden ausgangsseitig von den Summenbildnern 51a, 51b und 51c an eine Maximumserkennungseinrichtung 52 abgegeben. Die Maximumserkennungseinrichtung 52 betrachtet die einzelnen Stabilisierungsstromwerte $I_{stab,1}$, $I_{stab,2}$ und $I_{stab,3}$ und bestimmt hieraus den maximalen Stabilisierungsstromwert $I_{stab,max}$, der von der Maximumserkennungseinrichtung 52 ausgangsseitig abgegeben wird. Der maximale Stabilisierungsstromwert $I_{stab,max}$ wird einem Schwellenwertglied 53 zugeführt und dient dort zur dynamischen, also an den maximalen Stabilisierungsstromwert $I_{stab,max}$ angepassten, Festlegung eines Stabilisierungsschwellenwertes. Zur Bildung des Stabilisierungsschwellenwertes wird der Stabilisierungsstromwert $I_{stab,max}$ mit einem Querstabilisierungsfaktor f multipliziert, wobei der Querstabilisierungsfaktor f im Bereich zwischen 0 und 1 gewählt werden kann. Übliche geeignete Werte für den Querstabilisierungsfaktor f liegen zwischen 0,3 und 0,5, bevorzugt wird ein Wert von 0,4 gewählt.

Dem Schwellenwertglied 53 werden außerdem eingangsseitig die Stabilisierungsstromwerte $I_{stab,1}$, $I_{stab,2}$ und $I_{stab,3}$ zugeführt. In dem Schwellenwertglied 53 werden die Stabilisierungsstromwerte $I_{stab,1}$, $I_{stab,2}$ und $I_{stab,3}$ mit dem Stabilisierungsschwellenwert $f \cdot I_{stab,max}$ verglichen und es wird für diejenige Phase ein Blockiersignal $B_1$, $B_2$, $B_3$ ausgangsseitig abgegeben, deren Stabilisierungsstromwert $I_{stab,1}$, $I_{stab,2}$, $I_{stab,3}$ den Stabilisierungsschwellenwert $f \cdot I_{stab,max}$ unterschreitet.

Dieser Art und Weise der Bildung des Blockiersignals $B_1$, $B_2$, $B_3$ liegt zu Grunde, dass ein durch Beeinflussung der Stromwandler untereinander erzeugter Anstieg im Stabilisierungsstrom einer nicht von einem Kurzschluss betroffenen Phase deutlich geringer ist als der Stabilisierungsstrom $I_{stab,max}$ der tatsächlich von dem Kurzschluss betroffenen Phase. Der Querstabilisierungsfaktor f bezeichnet somit den prozentualen Anteil des maximalen Stabilisierungsstromes $I_{stab,max}$, den ein lediglich durch Beeinflussung der Stromwandler (also quasi durch eine Querbeeinflussung) erzeugter Anstieg im Stabilisierungsstromwert einer bestimmten Phase nicht überschreitet.

Ist beispielsweise Phase 13b (Figur 1) von einem Erdkurzschluss betroffen, erkennt die Blockiereinrichtung 50 anhand dem aus den Stromwerten $I_{a2}$ und $I_{b2}$ bezüglich dieser Phase 13b gebildeten Stabilisierungsstromwert $I_{stab,2}$ im Vergleich zu den anderen niedriger ausfallenden Stabilisierungsstromwerten $I_{stab,1}$ und $I_{stab,3}$ den maximalen Stabilisierungsstromwert $I_{stab,max}$, der mit dem Querstabilisierungsfaktor f multipliziert wird. Die aus den Stromwerten $I_{a1}$, $I_{b1}$ bzw. $I_{a3}$ und $I_{b3}$ gebildeten Stabilisierungsstromwerte $I_{stab,1}$ und $I_{stab,3}$ sollten üblicherweise lediglich durch Beeinflussung der Stromwandler erhöht sein und daher den Stabilisierungsschwellenwert in dem Schwellenwertglied 53 nicht überschreiten, so dass für diese Phasen die Blockiersignale $B_1$ und $B_3$ erzeugt werden, während das Blockiersignal $B_2$ nicht erzeugt wird, da zu der zugehörigen Phase 13b der maximale Stabilisierungsstromwert $I_{stab,max}$ erkannt worden ist.

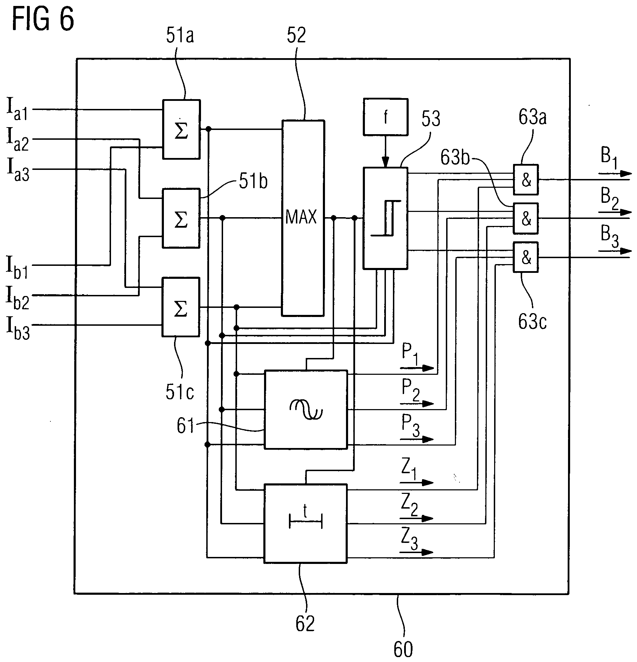

Figur 6 zeigt schließlich ein zweites Ausführungsbeispiel einer Blockiereinrichtung 60, die in wesentlichen Teilen dem ersten Ausführungsbeispiel der Blockiereinrichtung 50 entspricht. Daher sind einander entsprechenden Komponenten der Ausführungsbeispiele gemäß der Figuren 5 und 6 mit entsprechenden Bezugszeichen gekennzeichnet.

Um die Zuverlässigkeit der Bildung der Blockiersignale $B_1$, $B_2$ bzw. $B_3$ noch weiter zu erhöhen, ist in dem Ausführungsbeispiel der Blockiereinheit 60 gemäß Figur 6 zusätzlich eine Phasenlagenerkennungseinrichtung 61 sowie eine Zeitversatzerkennungseinrichtung 62 vorgesehen.

Die Phasenlagenerkennungseinrichtung 61 wird eingangsseitig mit den von den Summenbildnern 51a, 51b, 51c abgegebenen phasenbezogenen Stabilisierungsstromwerten $I_{stab,1}$, $I_{stab,2}$ und $I_{stab,3}$ beaufschlagt. Außerdem wird der Phasenlagenerkennungseinrichtung 61 der maximale Stabilisierungsstromwert $I_{stab,max}$ zugeführt. Die Phasenlagenerkennungseinrichtung 61 vergleicht die Phasenlagen der einzelnen Stabilisierungsstromwerte $I_{stab,1}$, $I_{stab,2}$, $I_{stab,3}$ mit der Phasenlage des maximalen Stabilisierungsstromwertes $I_{stab,max}$ und gibt genau dann für die entsprechende Phase ein Phasenlagenausgangssignal $P_1$, $P_2$, $P_3$ ab, wenn die Phasenlage des Stabilisierungsstromes der betreffenden Phase der Phasenlage des maximalen Stabilisierungsstromes $I_{stab,max}$ entspricht oder genau um 180° verschoben ist. Die Phasenlagensignale $P_1$, $P_2$, $P_3$ werden Und-Gliedern 63a, 63b und 63c zugeführt, denen eingangsseitig auch die Ausgangssignale des Schwellenwertgliedes 53 zugeführt werden.

In der Phasenlagenerkennungseinrichtung 61 wird die Erkenntnis angewandt, dass bei durch Beeinflussung der Stromwandler untereinander entstandenen erhöhten Stabilisierungsstromwerten deren Phasenlage durch den Kurzschlussstrom auf der Primärseite der jeweiligen von dem Kurzschluss betroffenen Phase aufgeprägt wird.

Der Zeitversatzerkennungseinrichtung 62 werden eingangsseitig die Stabilisierungsstromwerte $I_{stab,1}$, $I_{stab,2}$ und $I_{stab,3}$ zugeführt. Ebenfalls wird der Zeitversatzerkennungseinrichtung 62 der maximale Stabilisierungsstromwert $I_{stab,max}$ zugeführt. Die Zeitversatzerkennungseinrichtung 62 untersucht die Verläufe unmittelbar aufeinander folgender Werte der phasenbezogenen Stabilisierungsstromwerte $I_{stab,1}$, $I_{stab,2}$, $I_{stab,3}$ und des maximalen Stabilisierungsstromwertes $I_{stab,max}$ und gibt genau dann ein Zeitversatzsignal $Z_1$, $Z_2$, $Z_3$ für eine betreffende Phase ab, wenn ein Anstieg im Verlauf der Stabilisierungsstromwerte $I_{stab,1}$, $I_{stab,2}$, $I_{stab,3}$ für die betreffende Phase mit einem bestimmten Zeitversatz, vorzugsweise mit einem Zeitversatz zwischen 2 und 3 Millisekunden, zu dem Anstieg im Verlauf der maximalen Stabilisierungsstromwerte $I_{stab,max}$ auftritt. Das entsprechende Zeitversatzsignal $Z_1$, $Z_2$, $Z_3$ wird ebenfalls den Und-Gliedern 63a, 63b, 63c zugeführt.

In der Zeitversatzeinrichtung 62 wird die Erkenntnis angewandt, dass ein durch Beeinflussung der Stromwandler untereinander hervorgerufener Anstieg der Stabilisierungsströme in den nicht von einem Fehler betroffenen Phasen um einen bestimmten Zeitversatz dem Anstieg des Stabilisierungsstromwertverlaufes der tatsächlich von dem Fehler betroffenen Phase hinterherläuft.

Die Und-Glieder 63a, 63b und 63c geben genau dann ein Blockiersignal ab, wenn alle Eingangsbedingungen erfüllt sind, das heißt, wenn der Stabilisierungsstromwert einer bestimmten Phase unterhalb des Stabilisierungsschwellenwertes liegt, die Phasenlage des Stabilisierungsstromes dieser Phase mit der Phasenlage des maximalen Stabilisierungsstromes übereinstimmt und der Anstieg des Stabilisierungsstromverlaufes der betreffenden Phase dem Anstieg des maximalen Stabilisierungsstromverlaufes um einen bestimmten Zeitversatz hinterherläuft.

Obwohl in dem Ausführungsbeispiel der Blockiereinrichtung 60 gemäß Figur 6 zusätzlich zu der Ausführung gemäß Figur 5 sowohl die Phasenvergleichseinrichtung 61 als auch die Zeitversatzerkennungseinrichtung 62 dargestellt sind, sind im Bereich der Erfindung auch solche Ausführungsbeispiele denkbar, bei denen zusätzlich entweder nur die Phasenversatzerkennungseinrichtung 61 oder die Zeitversatzerkennungseinrichtung 62 vorhanden ist. Die Blockiersignale $B_1$, $B_2$, $B_3$ werden dann entsprechend anhand von zwei Eingangskriterien gebildet.

Bei dem Ausführungsbeispiel der Blockiereinrichtung 60 kann abweichend von der Darstellung gemäß Figur 6 auch vorgesehen sein, dass der Phasenlagenerkennungseinrichtung 61 und der Zeitversatzerkennungseinrichtung 62 anstelle der Stabilisierungsstromwerte die Differenzstromwerte zugeführt werden und diese mit der Phasenlage bzw. dem Verlauf der Differenzstromwerte derjenigen Phase mit dem maximalen Stabilisierungsstromwert verglichen werden.

Durch die Erfindung wird insgesamt folglich ein Verfahren aufgezeigt, das einfach in die Software von Differentialschutzgeräten aufgenommen werden kann, um durch Beeinflussung der Stromwandler hervorgerufene Fehlauslösungen zu vermeiden. Mit dem beschriebenen Verfahren können auf zuverlässige Art und Weise durch Beeinflussung der Stromwandler untereinander entstandene Differenzströme erkannt und eine Erzeugung entsprechender Auslösesignale verhindert werden.

Durch die erfindungsgemäße Wahl der Kriterien zur Bildung der Blockiersignale kann aber auch eine fälschliche Blockierung eines Auslösesignals verhindert werden, wenn für eine bestimmte Phase tatsächlich ein Kurzschluss vorliegt, das heißt, wenn anstelle einer einzelnen Phase tatsächlich zwei oder drei Phasen von einem Kurzschluss betroffen sind. In diesem Fall ergeben die Überprüfungen der Kriterien für die tatsächlich von dem Kurzschluss betroffenen Phasen eine Überschreitung des Stabilisierungsschwellenwertes sowie optional einen von Null bzw. 180° abweichenden Phasenlagenversatz und eine Unterschreitung des Zeitversatzes, da in diesem Fall nicht die Beeinflussung der Stromwandler untereinander vorherrscht, sondern der tatsächlich auf der jeweiligen Primärseite der einzelnen Stromwandler anliegende hohe Kurzschluss den Wert der Differenzströme bzw. Stabilisierungsströme beeinflusst.

**Patentansprüche**

**1.** Verfahren zum Erfassen eines Kurzschlusses bezüglich zumindest einer Phase (13a, 13b, 13c) eines Schutzobjektes (11) in einem mehrphasigen elektrischen Energieübertragungsnetz, bei dem

   - für jede Phase (13a, 13b, 13c) an zumindest zwei Messstellen des Schutzobjektes (11) Stromwerte erfasst werden;
   - für jede Phase (13a, 13b, 13c) aus den Stromwerten Differenzstromwerte bestimmt werden; und
   - ein Auslösesignal für eine bestimmte Phase (z.B. 13b) erzeugt wird, wenn der Differenzstromwert dieser Phase (z.B. 13b) einen Schwellenwert übersteigt;

   wobei

   - für jede Phase (13a, 13b, 13c) aus den Stromwerten ein Stabilisierungsstromwert bestimmt und ein Blockiersignal für eine bestimmte Phase (z.B. 13a, 13c) erzeugt wird, wenn der betreffende Stabilisierungsstromwert unterhalb eines vorgegebenen Stabilisierungsschwellenwertes liegt, wobei das Blockiersignal die Ausgabe eines Auslösesignals für die betreffende Phase (z.B. 13a, 13c) unterdrückt,

   **dadurch gekennzeichne**t, dass

   - der maximale Stabilisierungsstromwert bestimmt wird und der Stabilisierungsschwellenwert in Abhängigkeit von dem maximalen Stabilisierungsstromwert festgelegt wird;
   - eine Phasenlage zwischen den Differenzstromwerten oder den Stabilisierungsstromwerten der Phase (z.B. 13b) mit dem maximalen Stabilisierungsstrom und den Differenzstromwerten oder den Stabilisierungsstromwerten der übrigen Phasen (z.B. 13a, 13c) bestimmt wird; und
   - das Blockiersignal für eine bestimmte Phase (z.B. 13a, 13c) nur dann erzeugt wird, wenn die Phasenlage dieser Phase (z.B. 13a, 13c) mit der Phasenlage derjenigen Phase (z.B. 13b) mit dem maximalen Stabilisierungsstromwert übereinstimmt oder um 180 Grad verschoben ist.

**2.** Verfahren nach Anspruch 1,
   **dadurch gekennzeichnet, dass**

- der Stabilisierungsschwellenwert durch Multiplikation des maximalen Stabilisierungsstromwertes mit einem vorgebbaren Querstabilisierungsfaktor festgelegt wird.

3. Verfahren nach Anspruch 2,
   **dadurch gekennzeichne**t, dass

   - der Querstabilisierungsfaktor zwischen 0 und 1, vorzugsweise zwischen 0,3 und 0,5 gewählt wird.

4. Verfahren nach Anspruch 3,
   **dadurch gekennzeichnet, dass**

   - als Querstabilisierungsfaktor der Wert 0,4 gewählt wird.

5. Verfahren nach einem der vorangehenden Ansprüche,
   **dadurch gekennzeichnet, dass**

   - für jede Phase (13a, 13b, 13c) ein Verlauf aus mehreren zeitlich unmittelbar aufeinanderfolgenden Differenzstromwerten oder Stabilisierungsstromwerten betrachtet wird und
   - ein Blockiersignal für eine bestimmte Phase (z.B. 13a, 13c) nur dann erzeugt wird, wenn ein Anstieg des Verlaufs für diese Phase (z.B. 13a, 13c) erst um einen vorgegebenen Zeitversatz verzögert eintritt als der Anstieg des Verlaufs für diejenige Phase (z.B. 13b) mit dem maximalen Stabilisierungsstromwert.

6. Verfahren nach einem der vorangehenden Ansprüche,
   **dadurch gekennzeichnet, dass**

   - die jeweiligen Stabilisierungsstromwerte durch Summenbildung der Beträge aller für die betreffende Phase (13a, 13b, 13c) erfassten Stromwerte berechnet werden.

7. Elektrisches Differentialschutzgerät (12a, 12b) zur Überwachung eines Schutzobjektes (11) in einem elektrischen Energieversorgungsnetz auf Kurzschlüsse mit

   - einer Datenverarbeitungseinrichtung, die zur Durchführung eines Verfahrens gemäß einem der Ansprüche 1 bis 6 eingerichtet ist.

## Claims

1. Method for detecting a short circuit with respect to at least one phase (13a, 13b, 13c) of a protected object (11) in a multi-phase electrical power transmission grid, in which

   - current values are detected for each phase (13a, 13b, 13c) at at least two measuring points of the protected object (11);
   - differential current values are determined from the current values for each phase (13a, 13b, 13c); and
   - a triggering signal for a particular phase (e.g. 13b) is generated if the differential current value of this phase (e.g. 13b) exceeds a threshold value;

   wherein

   - a stabilizing current value is determined from the current values for each phase (13a, 13b, 13c) and a blocking signal is generated for a particular phase (e.g. 13a, 13c) if the relevant stabilizing current value is below a predetermined stabilization threshold value, wherein the blocking signal suppresses the output of a triggering signal for the relevant phase (e.g. 13a, 13c),

   **characterized in that**

   - the maximum stabilizing current value is determined and the stabilization threshold value is specified in dependence on the maximum stabilizing current value;
   - a phase angle is determined between the differential current values or the stabilizing current values of the phase (e.g. 13b) having the maximum stabilizing current and the differential current values or the stabilizing current values of the remaining phases (e.g. 13a, 13c); and

- the blocking signal for a particular phase (e.g. 13a, 13c) is only generated if the phase angle of this phase (e.g. 13a, 13c) corresponds to the phase angle of the phase (e.g. 13b) having the maximum stabilizing current value or is displaced by 180 degrees.

2. Method according to Claim 1, **characterized in that**

- the stabilization threshold value is specified by multiplying the maximum stabilizing current value by a predeterminable cross stabilization factor.

3. Method according to Claim 2, **characterized in that**

- the cross stabilization factor is selected to be between 0 and 1, preferably between 0.3 and 0.5.

4. Method according to Claim 3, **characterized in that**

- the value of 0.4 is selected as cross stabilization factor.

5. Method according to one of the preceding claims, **characterized in that**

- for each phase (13a, 13b, 13c), a variation of a number of differential current values or stabilizing current values immediately following one another in time is considered and
- a blocking signal for a particular phase (e.g. 13a, 13c) is only generated if a rise in the variation for this phase (e.g. 13a, 13c) only occurs delayed by a predetermined time offset from the rise in the variation of the phase (e.g. 13b) having the maximum stabilizing current value.

6. Method according to one of the preceding claims, **characterized in that**

- the respective stabilizing current values are calculated by forming the sum of all absolute values of all current values detected for the relevant phase (13a, 13b, 13c).

7. Electrical differential protection devices (12a, 12b) for monitoring a protected object (11) in an electrical power supply grid for short circuits comprising

- a data processing device which is arranged for carrying out a method according to one of Claims 1 to 6.

**Revendications**

1. Procédé de détection d'un court-circuit concernant au moins une phase (13a, 13b, 13c) d'un objet (11) à protéger dans un réseau de transport d'énergie électrique polyphasé, dans lequel

- on détecte, pour chaque phase (13a, 13b, 13c), des valeurs de courant en au moins deux points de mesure de l'objet (11) à protéger;
- pour chaque phase (13a, 13b, 13c), on détermine des valeurs de courant de différence à partir des valeurs de courant et
- on produit un signal de déclenchement pour une phase (par exemple 13b) déterminée si la valeur de courant de différence de cette phase (par exemple 13b) dépasse une valeur de seuil;

dans lequel

- pour chaque phase (13a, 13b, 13c), on détermine, à partir des valeurs de courant, une valeur de courant de stabilisation et on produit un signal de blocage pour une phase (par exemple 13a, 13c) déterminée si la valeur de courant de stabilisation concernée est inférieure à une valeur de seuil de stabilisation donnée à l'avance, le signal de blocage supprimant l'émission d'un signal de déclenchement pour la phase (par exemple 13a, 13c) concernée,

**caractérisé en ce que**

- on détermine la valeur de courant de stabilisation maximum et on fixe la valeur de seuil de stabilisation en fonction de la valeur de courant de stabilisation maximum;
- on détermine une position en phase entre les valeurs de courant de différence ou les valeurs de courant de stabilisation de la phase (par exemple 13b) ayant le courant de stabilisation maximum et les valeurs de courant de différence ou les valeurs de courant de stabilisation des autres phases (par exemple 13a, 13c) et
- on ne produit le signal de blocage pour une phase (par exemple (13a, 13c) déterminée que si la position en phase de cette phase (par exemple 13a, 13c) coïncide avec la position en phase de la phase (par exemple 13b) ayant la valeur de courant de stabilisation maximum ou est décalée de 180°.

2. Procédé suivant la revendication 1,
   **caractérisé en ce que**

   - l'on fixe la valeur de seuil de stabilisation en multipliant la valeur de courant de stabilisation maximum par un facteur de stabilisation transversale pouvant être donné à l'avance.

3. Procédé suivant la revendication 2,
   **caractérisé en ce que**

   - l'on choisit le facteur de stabilisation transversale entre 0 et 1, de préférence entre 0,3 et 0,5.

4. Procédé suivant la revendication 3,
   **caractérisé en ce que**

   - l'on choisit la valeur 0,4 comme facteur de stabilisation transversale.

5. Procédé suivant l'une des revendications précédents,
   **caractérisé en ce que**

   - on considère pour chaque phase (13a, 13b, 13c) une courbe composée de plusieurs valeurs de courant de différence ou valeur de courant de stabilisation se succédant immédiatement dans le temps et
   - on ne produit un signal de blocage pour une phase (par exemple 13a, 13c) déterminée que si une croissance de la courbe pour cette phase (par exemple 13a, 13c) se produit seulement en étant retardée d'un décalage dans le temps donné à l'avance par rapport à la croissance de la courbe pour la phase (par exemple 13b) ayant la valeur de courant de stabilisation maximum.

6. Procédé suivant l'une des revendications précédentes,
   **caractérisé en ce que**

   - on calcule les valeurs de courant de stabilisation respectives en sommant les valeurs absolues de toutes les valeurs de courant détectées pour les phases (13a, 13b, 13c) concernées.

7. Appareil (12a, 12b) électrique de protection différentielle pour contrôler des courts-circuits sur un objet (11) à protéger dans un réseau d'alimentation en énergie électrique comprenant

   - un dispositif de traitement de données, qui est conçu pour effectuer un procédé suivant l'une des revendications 1 à 6.

FIG 1

FIG 2

FIG 3

FIG 4

## FIG 5

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004057175 A
- JP 11341679 B